# DEMANDE DE BREVET EUROPEEN

(11) **EP 0 774 375 A2**
(43) Date de publication de la demande: **21.05.1997**
(21) Numéro de dépôt: 96402389.9
(22) Date de dépôt: 08.11.1996
(51) Int. Cl.: B60N 2/06, F16C 29/04

(54) **Glissière de siège de véhicule**

(30) Priorité: 14.11.1995 FR 9513472
(71) Demandeur: BERTRAND FAURE EQUIPEMENTS S.A., 92100 Boulogne (FR)
(72) Inventeur: Rohee, René, 61100 La Chapelle Biche (FR); Baloche, François, 61100 Flers (FR)
(74) Mandataire: Burbaud, Eric

(57) **Abrégé**

Il s'agit d'une glissière de siège de véhicule comprenant un premier profilé (1) présentant en section droite la forme d'un U étroit dont les ailes verticales sont prolongées extérieurement par des rabats (8) et un second profilé (3) présentant en section droite la forme d'un U renversé large qui enveloppe le premier profilé et dont les bases des ailes verticales (10) sont prolongées intérieurement par des auges rentrantes (11, 12), ces deux profilés étant agencés de façon à former entre eux quatre chemins de billes (4, 5). Chaque aile verticale (10) présente un ressaut (10₁) en saillie vers l'extérieur et chaque rabat (8) présente un prolongement (8₁, 8₂) propre à s'accrocher contre la face intérieure d'un ressaut (10₁) lorsqu'une sollicitation à l'écartement vertical est exercée entre les deux profilés (1 et 3).

## Description

L'invention est relative aux glissières de sièges de véhicules, dispositifs qui sont interposés entre les planchers et les sièges de ces véhicules en vue de rendre possible le réglage de la position longitudinale desdits sièges.

Elle vise plus particulièrement, parmi ces glissières, celles qui comprennent : un premier profilé, un second profilé emboîté avec jeu dans le premier profilé de façon à ménager entre ces deux profilés quatre "chemins de billes" longitudinaux, et des groupes de billes logés dans lesdits chemins de façon à rendre possibles les glissements longitudinaux mutuels des deux profilés avec roulement, le premier profilé présentant en section droite la forme générale d'un U étroit qui comprend, d'une part, un fond plat horizontal et, d'autre part, deux ailes s'étendant chacune verticalement depuis le fond jusqu'à un bord d'extrémité prolongé extérieurement par des rabats, et le second profilé présentant en section droite la forme générale d'un U large qui comprend, d'une part, une base horizontale plate voisine des bords d'extrémité des ailes du premier profilé et, d'autre part, deux ailes s'étendant chacune sensiblement verticalement en direction opposée des deux ailes du premier profilé depuis la base jusqu'à un bord d'extrémité en enveloppant le premier profilé, le bord d'extrémité de chacune desdites ailes du second profilé étant prolongé intérieurement par une auge rentrante présentant successivement un tronçon sensiblement horizontal puis un tronçon sensiblement vertical s'étendant le long d'une aile verticale du premier profilé, en direction du bord d'extrémité de cette aide, chaque rabat étant interposé entre deux chemins de billes, savoir d'une part un premier chemin de bille disposé entre ledit rabat et une zone de coin intérieure qui appartient au second profilé et qui est située entre la base et une aile de ce second profilé et, d'autre part, un deuxième chemin de billes disposé entre le rabat et l'auge correspondante.

Ces glissières à quatre chemins de billes sont intéressantes en ce qu'elles rendent possibles des coulissements longitudinaux très faciles des sièges, c'est-à-dire faisant intervenir des roulements, même lorsque ces sièges sont partiellement sollicités au soulèvement, comme c'est le cas pour les sièges avant des véhicules automobiles, lorsqu'ils sont repoussés rapidement vers l'avant, par une poussée exercée sur leur dossier alors plus ou moins rabattus vers l'avant sur l'assise.

Il est par ailleurs impératif que les glissières en question opposent une résistance très élevée aux efforts de séparation verticale mutuelle de leurs deux profilés constitutifs, efforts appliqués par exemple sur ces glissières lors d'un choc accidentel, en particulier lorsque le siège considéré est du type à ceinture embarquée, pour lequel la ceinture de maintien du passager sur le siège présente un point d'ancrage localisé au sommet du dossier de ce siège.

Dans les modes de réalisation qui ont été proposés pour les glissières à quatre chemins de billes du genre ci-dessus décrit, les rabats qui prolongent extérieurement les ailes du profilé étroit sont relativement courts et substantiellement plats et leurs bords demeurent en toutes circonstances écartés des ailes verticales du profilé plus large qui les coiffe (voir brevet US n° 4 787 756).

Il en résulte que, lors d'une très forte sollicitation à la séparation verticale mutuelle des deux profilés, les auges peuvent avoir tendance à s'ouvrir et les rabats, à se déplier et à échapper aux bords intérieurs alors déformés de ces auges.

L'invention a pour but, entre autres, de remédier à cet inconvénient, en assurant un ancrage vertical mutuel plus solide des deux profilés.

A cet effet, les glissières du genre en question selon l'invention sont essentiellement caractérisées en ce que, d'une part, chacune des deux ailes de leur profilé large présente un ressaut faisant saillie vers l'extérieur, chaque ressaut présentant une face intérieure dite "face intérieure rentrante", orientée vers le bord d'extrémité de l'aile correspondante du second profilé, et en ce que, d'autre part, chaque rabat de leur profilé étroit comprend un prolongement faisant également saillie vers l'extérieur et longeant normalement avec un faible jeu intermédiaire la face intérieure rentrante d'un desdits ressauts.

De la sorte, lors des fortes sollicitations à l'écartement vertical mutuel des deux profilés, le bord dudit rabat est appliqué jointivement contre ladite face intérieure avec un effet d'accrochage, ce qui rend alors impossible tout dépliement du rabat ainsi que son échappement hors de l'auge.

Dans des modes de réalisation préférés, on a recours en outre à l'une et/ou à l'autre des dispositions suivantes :
- le prolongement de chaque rabat comprend successivement un pan sensiblement vertical s'étendant vers le bord d'extrémité de l'aile correspondante du second profilé puis par un pan terminal oblique s'étendant en biais le bord d'extrémité de l'aile correspondante du second profilé et vers l'extérieur, ledit pan terminal oblique définissant le chemin de billes inférieur correspondant en prenant appui sur les billes concernées,
- chaque ressaut prévu dans une aile du second profilé présente un profil en V ouvert vers l'intérieur.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1, de ce dessin, montre en vue en bout une glissière de siège de véhicule établie selon l'invention en son état normal.

La figure 2 montre semblablement la même glissière en l'état qu'elle occupe lorsqu'une sollicitation à l'écartement est exercée entre ses deux profilés.

La figure 3 montre encore semblablement la même glissière, mais renversée par rapport à celle de la figure 1.

Dans ce qui suit on adoptera, pour clarifier l'exposé, une terminologie faisant intervenir des références aux positions relatives haute ou basse, supérieure ou inférieure, de certains composants, à leur forme en U ou en U renversé..., mais il doit être bien compris que ces références ne sont adoptées qu'à titre illustratif, les références en question pouvant aussi être intégralement inversées sans que l'on sorte du cadre de l'invention, les glissières considérées pouvant être utilisées dans l'un ou l'autre sens.

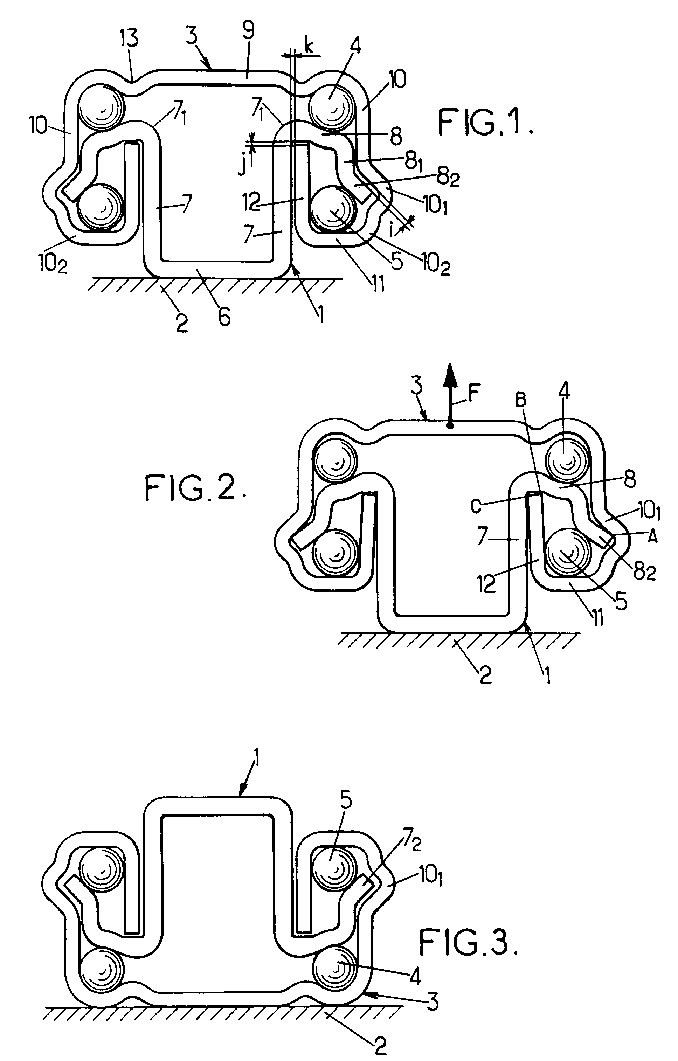

La glissière considérée sur la figure 1 comprend :
- un profilé fixe 1 inférieur destiné à être fixé sur le plancher 2 du véhicule,
- un profilé mobile 3 supérieur destiné à être fixé sur l'assise d'un siège de ce véhicule (non représenté) et emboîté avec jeu dans le profilé fixe,
- et un pluralité de billes 4, 5 interposées entre le deux profilés pour rendre possibles leurs coulissements longitudinaux relatifs avec roulement.

Chacun des deux profilés 1 et 3 est constitué par une tôle pliée obtenue de toute façon désirable (emboutissage, extrusion...) et présentant un même profil ou section droite sur toute sa longueur.

Le profilé fixe 1 présente en section droite la forme générale d'un U étroit à fond plat 6 et à ailes verticales 7 prolongées extérieurement par des rabats 8 légèrement inclinés vers le bas.

Le profilé mobile présente en section droite la forme générale d'un U large renversé à base 9 sensiblement plate et à ailes 10 sensiblement verticales enveloppant le premier profilé 1, la base de chacune de ses ailes 10 étant prolongée intérieurement par une auge rentrante qui présente successivement un tronçon sensiblement horizontal 11 puis un tronçon sensiblement vertical 12 remontant le long d'une aile verticale 7 du profilé fixe.

Des gorges 13 sont prévues dans les zones latérales de la face supérieure de la base 9 de façon à former des nervures en saillie sur la face inférieure de cette base.

En outre :
- chacune des ailes 10 du profilé large 3 comprend dans la moitié basse de son étendue un ressaut 10₁ faisant saillie vers l'extérieur et présentant de préférence une section droite en V,
- et chaque rabat 8 est lui-même prolongé par un premier pan 8₁ s'étendant verticalement vers le bas et par un pan terminal oblique 8₂ s'étendant vers le bas et vers l'extérieur.

Les profils ou sections droites des deux profilés 1 et 3 sont prévus de façon à ménager entre eux quatre chemins de billes : les deux premiers chemins, supérieurs, correspondant aux billes 4, sont disposés entre les faces supérieures des rabats 8 et les zones intérieures en coin du second profilé 3, zones délimitées horizontalement par les ailes 10 et par les nervures 13, et les deux autres chemins, inférieurs, correspondant aux billes 5 sont disposés entre les auges 11, 12 et les faces inférieures des pans 8₂ terminant les rabats 8.

Pour l'état normal de la glissière, l'ensemble des deux pans 8₁ et 8₂ s'étend le long de la portion supérieure interne du ressaut 10₁ avec interposition d'un petit jeu i (voir figure 1).

Pour ledit état normal, l'extrémité supérieure du tronçon vertical 12 de chaque auge se trouve à une petite distance j de la face en regard, du rabat 8, qui coiffe cette extrémité et ledit tronçon 12 se trouve lui-même à une petite distance horizontale k d'une aile verticale 7 du premier profilé 1.

On voit que, dans ces conditions, les coulissements longitudinaux du profilé mobile 3 par rapport au profilé fixe 1 peuvent intervenir très librement, avec roulement des billes 4 et 5, la totalité des charges du profilé mobile étant transmise au profilé fixe par lesdites billes, sans qu'il y ait aucun contact local entre les deux profilés concernés.

Si, dans ces conditions, on exerce sur le profilé mobile supérieur 3 une sollicitation verticale vers le haut F (figure 2), on observe les conséquences suivantes :
- la sollicitation F en question se traduit par une poussée verticale exercée vers le haut par les auges 11, 12 contre les billes 5, ce qui repousse vers le haut ces billes et donc les pans 8₂ en appliquant ces derniers contre les ressauts 10₁ selon les lignes A avec suppression des jeux i,
- les tranches supérieures des tronçons verticaux 12 des auges viennent également en contact avec les racines, des rabats 8, qui les coiffent, selon les lignes B, avec suppression des jeux j.

Dès que les jeux i et j sont supprimés, la sollicitation F exercée sur le profilé supérieur 3 est intégralement transmise au profilé inférieur 1 le long des zones linéaires de contact A et B.

L'accrochage qui résulte des contacts établis en A entre les ressauts 10₁ du profilé mobile 3 et les extrémités des pans obliques 8₂ du profilé fixe 1 est extrêmement solide car il interdit tout dépliement du rabat 8 susceptible de le faire échapper hors de l'auge 11, 12.

Il est à noter également que l'application de chaque pan oblique 8₂ sur une bille 5 a pour effet de solliciter cette bille vers l'intérieur de la glissière en appliquant horizontalement le tronçon 12 correspondant contre l'aile verticale 7, adjacente, avec suppression corrélative du jeu k.

En d'autres termes, le tronçon 12 est appliqué horizontalement en C contre l'aile verticale 7 qui le côtoie horizontalement, ce qui interdit alors l'ouverture de l'auge 11, 12 : c'est là une source supplémentaire de résistance à la séparation mutuelle des deux profilés 1 et 3.

En définitive, la résistance en question est excellente.

Il est à noter que la construction proposée ci-dessus de la glissière se prête à des montages de celle-ci dans tous les sens.

On a illustré sur la figure 3 le sens inverse de la figure 1, pour lequel le profilé large 3 devient le profilé fixe inférieur fixé sur le plancher 2 du véhicule alors qu'au contraire le profilé étroit 1 devient le profilé supérieur mobile fixé sur l'assise.

Dans ce cas, comme dans le précédent, on observe les avantages précédemment indiqués en ce qui concerne aussi bien la grande facilité des coulissements longitudinaux mutuels des deux profilés mettant en oeuvre de simples roulements que l'excellente résistance à la séparation verticale mutuelle desdits profilés lors de l'exercice d'une sollicitation verticale vers le haut sur le profilé mobile 1, l'accrochage du pan oblique extérieur 8₂ qui prolonge chaque rabat 8 du profilé étroit contre le ressaut 10₁ en regard de l'aile 10 du profilé large étant encore observé ici.

On pourrait également monter la glissière considérée sur une portion de plancher inclinée ou même verticale, le fond 6 du profilé étroit 1 ou la base 9 du profilé large 3 étant alors orienté verticalement : même pour de telles orientations de la glissière, on retrouve les qualités de roulement et d'accrochage ci-dessus décrites.

## Revendications

1. Glissière de siège de véhicule, comprenant un premier profilé (1), un second profilé (3) emboîté avec jeu dans le premier profilé de façon à ménager entre ces deux profilés quatre "chemins de billes" longitudinaux, et des groupes de billes (4, 5) logés dans lesdits chemins de façon à rendre possibles les glissements longitudinaux mutuels des deux profilés avec roulement, le premier profilé (1) présentant en section droite la forme générale d'un U étroit qui comprend, d'une part, un fond plat (6) horizontal et, d'autre part, deux ailes (7) s'étendant chacune verticalement depuis le fond (6) jusqu'à un bord d'extrémité (7₁) prolongé extérieurement par des rabats (8), et le second profilé (3) présentant en section droite la forme générale d'un U large qui comprend, d'une part, une base horizontale (9) plate voisine des bords d'extrémité (7₁) des ailes du premier profilé et, d'autre part, deux ailes (10) s'étendant chacune sensiblement verticalement en direction opposée des deux ailes (7) du premier profilé depuis la base (9) jusqu'à un bord d'extrémité (10₂) en enveloppant le premier profilé, le bord d'extrémité (10₂) de chacune desdites ailes du second profilé étant prolongé intérieurement par une auge rentrante (11, 12) présentant successivement un tronçon sensiblement horizontal (11) puis un tronçon sensiblement vertical (12) s'étendant le long d'une aile verticale (7) du premier profilé, en direction du bord d'extrémité (7₁) de cette aile, chaque rabat (8) étant interposé entre deux chemins de billes, savoir d'une part un premier chemin de bille disposé entre ledit rabat et une zone de coin intérieure qui appartient au second profilé et qui est située entre la base (9) et une aile (10) de ce second profilé et, d'autre part, un deuxième chemin de billes disposé entre le rabat (8) et l'auge (11, 12) correspondante,
caractérisée en ce que, d'une part, chacune des deux ailes (10) du second profilé (3) présente un ressaut (10₁) faisant saillie vers l'extérieur, chaque ressaut (10₁) présentant une face intérieure dite "face intérieure rentrante", orientée vers le bord d'extrémité (10₂) de l'aile correspondante du second profilé,
et en ce que, d'autre part, chaque rabat (8) du premier profilé comprend un prolongement (8₁, 8₂) faisant également saillie vers l'extérieur et longeant normalement avec un faible jeu intermédiaire (i) la face intérieure rentrante d'un desdits ressauts.

2. Glissière selon la revendication 1, caractérisée en ce que le prolongement (8₁, 8₂) de chaque rabat (8) comprend successivement un pan sensiblement vertical (8₁) s'étendant vers le bord d'extrémité (10₂) de l'aile correspondante du second profilé, puis un pan terminal oblique (8₂) s'étendant en biais vers le bord d'extrémité (10₂) de l'aile correspondante du second profilé et vers l'extérieur, ledit pan terminal oblique définissant le deuxième chemin de billes correspondant en prenant appui sur les billes concernées (5).

3. Glissière selon l'une quelconque des revendications 1 et 2, dans laquelle chaque ressaut (10₁) prévu dans une aile (10) du second profilé (3) présente un profil en V ouvert vers l'intérieur.
